# EUROPÄISCHE PATENTSCHRIFT

(11) **EP 3 218 757 B1**
(45) Veröffentlichungstag und Bekanntmachung des Hinweises auf die Patenterteilung: **31.03.2021**
(21) Anmeldenummer: 15793816.8
(22) Anmeldetag: 11.11.2015
(51) Int. Cl.: G02B 21/00, G02B 26/10

(54) **MIKROSKOP MIT GERINGEM VERZEICHNUNGSFEHLER**
MICROSCOPE HAVING LOW DISTORTION ERROR
MICROSCOPE À FAIBLE DISTORSION

(30) Priorität: 12.11.2014 DE 102014017001
(43) Veröffentlichungstag der Anmeldung: 20.09.2017
(73) Patentinhaber: Carl Zeiss Microscopy GmbH, 07745 Jena (DE); Carl Zeiss AG, 73447 Oberkochen (DE)
(72) Erfinder: SCHWEDT, Daniel, 07745 Jena (DE); ANHUT, Tiemo, 07745 Jena (DE); WALD, Matthias, 07751 Jena (DE); BÖHME, Beate, 07751 Großpürschütz (DE); KAUFHOLD, Tobias, 07749 Jena (DE)
(74) Vertreter: Loritz, Rainer
(86) Internationale Anmeldenummer: PCT/EP2015/076338
(87) Internationale Veröffentlichungsnummer: WO 2016/075195

(56) Entgegenhaltungen:
- WO-A1-2008/037346
- WO-A1-2015/158861
- DE-A1-102013 005 927
- US-A1- 2003 230 710
- US-A1- 2004 031 930

## Beschreibung

Die Offenbarung betrifft ein Mikroskop mit einem optischen System, welches einen Beleuchtungsstrahlengang definiert und folgende Bauteile umfasst: eine Lichtquelle, die eine (räumlich begrenzte) Lichtverteilung bereitstellt, ein Mikroskopobjektiv mit einer Pupillenebene und einem (objektseitigen) Fokus, eine Abtastungsoptik zum Erzeugen einer zu der Pupillenebene des Mikroskopobjektivs konjugierten Pupillenebene, mindestens zwei (hinsichtlich einer jeweiligen Ablenkrichtung) variabel einstellbare Strahlablenkeinheiten und einen Hohlspiegel zum Abbilden (mindestens) eines jeweiligen Punktes der ersten und der zweiten Strahlablenkeinheit aufeinander, wobei das optische System mindestens einen Punkt der Lichtverteilung und einen jeweiligen Punkt des Fokus (des Mikroskopobjektivs) aufeinander abbildet, wobei optisch zwischen dem Mikroskopobjektiv und der Abtastungsoptik ein (ebenes oder zumindest im wesentlichen ebenes) erstes Zwischenbild liegt, wobei die zweite Strahlablenkeinheit in der konjugierten Pupillenebene angeordnet ist. Die Abbildung durch den Hohlspiegel stellt eine weitere konjugierte Pupillenebene bereit, in welcher die erste Strahlablenkeinheit angeordnet ist.

Im Sinne der Erfindung ist Licht jede mit optischen Mitteln manipulierbare elektromagnetische Strahlung, insbesondere einschließlich infraroter und ultravioletter Strahlung. Die Lichtquelle kann zur Bereitstellung der Lichtverteilung insbesondere einen Lichtwellenleiter und/oder einen Strahlformer umfassen. Zudem kann sie einen Intensitätsmodulator umfassen. Die Lichtverteilung der Lichtquelle kann zweidimensional oder dreidimensional sein und dabei unterschiedliche Formen aufweisen, beispielsweise eine einzelne beispielsweise punktförmige oder linienförmige Fläche oder ein einzelnes, beispielsweise kugelförmiges oder stabförmiges Volumen oder mehrere separate beispielsweise punktförmige oder linienförmige Flächen oder entsprechende beispielsweise kugelförmige oder stabförmige Volumina. Strahlablenkeinheiten werden auch als Scanner bezeichnet. Eine Übersicht über bekannte Anordnungen von Strahlablenkeinheiten zum Rastern von Licht in Mikroskopen sind beispielsweise in "Confocal Scanning Optical Microscopy and Related Imaging Systems" von T. R. Corle und G. S. Kino (Academic Press, 1996, S. 214) beschrieben. Darin wird die Abtastungsoptik als "scan objective" (in Abweichung vom sonst üblichen Begriff "scan lens") bezeichnet. Sie stellt eine kollimierte konjugierte Pupillenebene am Ort einer Strahlablenkeinheit bereit. Die Kombination von Abtastungsoptik und Tubuslinse wird als Transferoptik bezeichnet.

Die Anordnung der Ablenkeinheit(en) in einer (jeweiligen) konjugierten Objektivpupille ermöglicht vorteilhafterweise die Bereitstellung eines ruhenden Strahlquerschnitts in weiteren konjugierten Pupillen. Dadurch sind wie in US 2003/230710 A1 oder in WO 2008/037346 A1 Manipulationen der Wellenfront mit hoher Genauigkeit möglich. Zudem ist auf diese Weise die Randstrahlabblendung durch Vignettierungen an den Optiken minimal.

Die beschriebenen Mikroskope haben jedoch den Nachteil, dass die Abtastungsoptik, die zur Erzeugung der konjugierten Pupillenebene benötigt wird, aufwendig und nicht lichteffizient ist, da sie unterschiedliche Abbildungsfehler wie Bildfeldwölbung und Farbquerfehler kompensieren muss, um eine hohe Abbildungsqualität zu ermöglichen. Zudem ist aufgrund des geringen Abstands der konjugierten Pupillenebene von der Abtastungsoptik der für die Ablenkeinheit verfügbare Bauraum klein.

Im Stand der Technik sind Mikroskope der eingangs genannten Art mit zwei torischen Hohlspiegeln beispielsweise unter der Bezeichnung "BIO-RAD Radiance2100" und aus WO 90/00755 A1 bekannt. Wesentliche Nachteile daran sind die begrenzte Bildgüte, die hohe Empfindlichkeit der Justage und die hohen Kosten für die Fertigung torischer Spiegel. Eine entsprechende Anordnung mit mikroelektromechanischem Antrieb der Ablenkeinheit ist beispielsweise aus US 2013/107338 A1 bekannt.

Die in US 2010/0208319 A1 beschriebene Anordnung löst dieses Problem nur partiell und hat den Nachteil, daß der Zwischenfokus auf einem konvexen Spiegel liegt, so dass Fehler dieses Spiegels direkt in die Probe abgebildet werden.

Beide vorgenannte Lösungen weisen durch die beiden Hohlspiegel beziehungsweise die doppelte Reflexion an einem einzelnen Hohlspiegel noch immer einen relativ hohen Lichtverlust auf.

Der Erfindung liegt die Aufgabe zugrunde, ein Mikroskop der eingangs genannten Art zu verbessern, so dass eine höhere Bildgüte, eine einfachere Justage und ein geringerer Lichtverlust ermöglicht werden. Darüber hinaus soll in besonderen Ausgestaltungen ein geringerer Kostenaufwand nötig sein.

Die Aufgabe wird gelöst durch ein Mikroskop, welches die in Anspruch 1 angegebenen Merkmale aufweist. Vorteilhafte Ausgestaltungen sind in den Unteransprüchen angegeben.

Es ist vorgesehen, dass der Hohlspiegel und die erste Strahlablenkeinheit und die zweite Strahlablenkeinheit so angeordnet sind, dass der Beleuchtungsstrahlengang am Hohlspiegel genau einmal reflektiert wird und eine dabei durch den Hohlspiegel verursachte erste Verzeichnung und eine durch die erste und die zweite Strahlablenkeinheit verursachte zweite Verzeichnung der Abbildung (Lichtverteilung-Fokus) einander zumindest teilweise kompensieren.

Der Hohlspiegel wirkt achromatisch. Auf diese Weise kann mit geringem optischen Aufwand, insbesondere einer geringen Anzahl von Grenzflächen, eine weitere konjugierte Pupillenebene bereitgestellt werden. Die gegenseitige Kompensation der Verzeichnungen ermöglicht die Abbildung der konjugierten Pupillen mit den Strahlablenkeinheiten aufeinander nahezu fehlerfrei mit nur einem abbildenden Element. Auf diese Weise kann sowohl kostengünstig und lichteffizient als auch mit einfacher Justage eine höhere Bildgüte der Beleuchtung (und in entgegengesetzter Richtung bei gekoppeltem Detektionsstrahlengang auch der mikroskopischen Bildgebung) erreicht werden. Auf zusätzliche Korrektionsoptiken kann weitgehend verzichtet werden, was eine einfachere Justage und einen geringeren Lichtverlust ermöglicht. Zudem sind beide konjugierten Pupillen gleichberechtigt. Das bedeutet, daß beide Strahlablenkeinheiten mit individuell definierbaren Winkelgeschwindigkeiten angesteuert werden können, wodurch jeder beliebige Bildfeldwinkel einstellbar ist. Das heißt, dass auch eine Bildfelddrehung, wie sie bislang in Anordnungen ohne Abbildung möglich ist, weiterhin durchgeführt werden kann.

Dabei ist im Beleuchtungsstrahlengang optisch zwischen diesen beiden Strahlablenkeinheiten zweckmäßigerweise genau ein Hohlspiegel angeordnet. Besonders vorteilhaft ist es, wenn optisch zwischen diesen beiden Strahlablenkeinheiten ausschließlich der Hohlspiegel (aber keine anderen optisch wirksamen Flächen) angeordnet ist. In diesen Ausführungsformen ist der Lichtverlust aufgrund der geringen Anzahl optischer Grenzflächen besonders niedrig.

Erfindungsgemäß sind der Hohlspiegel und die erste Strahlablenkeinheit und die zweite Strahlablenkeinheit zum Kompensieren der ersten und zweiten Verzeichnungen so angeordnet, dass ein ebener Reflexionswinkel einer optischen Achse des (von der Lichtquelle kommenden, ruhenden) Beleuchtungsstrahlengangs auf der ersten Strahlablenkeinheit in einer Nullstellung der ersten und der zweiten Strahlablenkeinheit doppelt so groß ist wie ein ebener Reflexionswinkel der optischen Achse am Hohlspiegel. Die beiden Strahlablenkeinheiten stehen in Nullstellung, wenn sie die optische Achse des von der Lichtquelle kommenden, ruhenden Beleuchtungsstrahlengangs koaxial zur optischen Achse des Mikroskopobjektivs in das Mikroskopobjektiv lenken. Mit anderen Worten: In einem dem Hohlspiegel und der ersten Strahlablenkeinheit gemeinsamen Koordinatensystem beträgt der Winkel zwischen der Drehachse der ersten Strahlablenkeinheit und der Flächennormalen des Hohlspiegels auf dessen Hauptachse beziehungsweise auf der optischen Achse des optischen Systems (zwischen der Lichtverteilung und der ersten Strahlablenkeinheit) 90°+α/2, wobei α der Winkel zwischen einfallendem und reflektiertem Strahl am Hohlspiegel ist. Diese Konfiguration ermöglicht eine besonders weitgehende gegenseitige Kompensation der Verzeichnungen, da sich nahezu identische Feldverzeichnungen mit entgegengesetztem Vorzeichen durch die Abbildung durch den Spiegel und durch den Scanvorgang ergeben.

Besonders bevorzugt sind dabei Ausführungsformen, in denen ein Krümmungsradius des Hohlspiegels (im Falle eines sphärischen Hohlspiegels der Krümmungsradius) einer optischen Weglänge zwischen dem Hohlspiegel und der ersten Strahlablenkeinheit und einer optischen Weglänge zwischen dem Hohlspiegel und der zweiten Strahlablenkeinheit entspricht. Diese Konfiguration ermöglicht eine besonders weitgehende gegenseitige Kompensation der Verzeichnungen und minimale Abbildungsfehler für beliebige Ablenkwinkel an der ersten Strahlablenkeinheit.

Vorteilhafterweise können der Hohlspiegel eine sphärische Form aufweisen und der Krümmungsmittelpunkt des Hohlspiegels zwischen der ersten Strahlablenkeinheit und der zweiten Strahlablenkeinheit liegen, insbesondere auf einem Kreisbogen um den zentralen Auftreffpunkt des Hohlspiegels (definiert durch die Lage der optischen Achse auf dem Hohlspiegel in der Nullstellung der ersten und zweiten Strahlablenkeinheit), der durch die Auftreffpunkte der optischen Achse des optischen Systems auf die erste und die zweite Strahlablenkeinheit (in deren Nullstellung) verläuft, insbesondere in der Mitte dieses Kreisbogens. Sphärische Hohlspiegel sind mit besonders geringem Kostenaufwand verfügbar. Durch die spezielle Anordnung und Ausrichtung wird eine maximale Verzeichnungskompensation erreicht.

Aufgrund des schrägen Einfalls des Beleuchtungsstrahlengangs auf den Hohlspiegel resultiert bei einem sphärischem Hohlspiegel ein Astigmatismus. Um diesen zu verringern oder zu vermeiden, kann der Hohlspiegel eine torische Form (Oberflächenform eines Torusschnittes) aufweisen. Vorzugsweise weist der Hohlspiegel dabei einen ersten Krümmungsradius, der um einen Faktor Cos(Einfallswinkel) kleiner als das Doppelte des Krümmungsradius des Zwischenbilds ist, und einen zweiten Krümmungsradius, der um den Faktor Cos(Einfallswinkel) größer als das Doppelte des Krümmungsradius des Zwischenbilds ist, auf. Vorzugsweise verläuft die zum ersten Krümmungsradius gehörige erste Krümmung um eine Achse, die parallel zu einer Drehachse der ersten Strahlablenkeinheit ist, und die zum zweiten Krümmungsradius gehörige Krümmung orthogonal zur ersten Krümmung. Weniger kostenaufwendig sind Ausführungsformen, in denen das optische System, insbesondere bei sphärischer Form des Hohlspiegels, zwischen der Lichtquelle und der ersten Strahlablenkeinheit eine Optik zur Kompensation von Astigmatismus, beispielsweise eine Zylinderlinse, aufweist.

In einer ersten von zwei alternativen Ausführungsformen bildet die Abtastungsoptik das erste Zwischenbild über die zweite Strahlablenkeinheit (deren reflektierende Oberfläche) in ein zweites Zwischenbild ab, welches räumlich gekrümmt ist, wobei das zweite Zwischenbild optisch zwischen dem Hohlspiegel und der zweiten Strahlablenkeinheit liegt und der Hohlspiegel so angeordnet ist, dass er kollimierte Lichtstrahlen, die ihn von der ersten Strahlablenkeinheit aus erreichen, in das zweite Zwischenbild fokussiert. Das ermöglicht eine kompakte Anordnung von Strahlablenkeinheiten und Abtastungsoptik. Durch vorzugsweise Anordnung des Hohlspiegels im Abstand seines Krümmungsradius von der ersten konjugierten Pupille kann eine hochgenaue Abbildung in derselben Entfernung unabhängig vom Feldwinkel (über ein gekrümmtes zweites Zwischenbild) bereitgestellt werden. Die Abtastungsoptik ist dabei zweckmäßigerweise frei von einer Bildfeldwölbungskorrektur, so dass sie okularartig ausgebildet ist. Das verringert den Kostenaufwand für das Mikroskop insgesamt.

Die (reflektierende Oberfläche der) Ablenkeinheit ist damit im Gegensatz zum Stand der Technik nicht mehr in einem kollimierten, sondern in einem konvergenten Abschnitt des Detektionsstrahlengangs angeordnet. Die Transferoptik ist derart ausgebildet, dass bei Entnahme der zweiten Strahlablenkeinheit ein reelles gekrümmtes Abbild der ersten Zwischenbildebene entstünde. Die räumliche Krümmung des Zwischenbildes erlaubt die Bereitstellung der konjugierten Pupillenebene mittels einer gegenüber herkömmlichen, kollimierenden Abtastobjektiven deutlich vereinfachten Abtastungsoptik, insbesondere ohne Korrektur der Bildfeldwölbung, bei dennoch gleicher Abbildungsqualität des gesamten optischen Systems. Dabei können insbesondere die bisher zur Ebnung üblichen (feldnahen) Linsen mit negativer Brennweite/Brechkraft (W. J. Smith: "Modern Lens design", McGraw-Hill, 1992, Kapitel 22, Seite 411) entfallen. Eine solche Abtastungsoptik braucht in ihren optischen Eigenschaften und ihrer Güte eher lediglich einem Okular als einem herkömmlichen Abtastobjektiv zu entsprechen. Der Krümmungsradius des zweiten Zwischenbildes entspricht dann vorzugsweise dem Abstand zwischen der Ablenkeinheit und der Fokusposition des ersten Zwischenbilds. Zusätzlich kann auch die Korrektur des Farbquerfehlers im Sinne eines Kompensationssystems auf die Abtastungsoptik und die Tubuslinse aufgeteilt werden, was eine weitere Vereinfachung der Abtastungsoptik bedeutet. Das Mikroskop kann zweckmäßigerweise so ausgebildet sein, dass die Abtastungsoptik und die Tubuslinse einander hinsichtlich des Farbquerfehlers kompensieren.

Besonders vorteilhaft ist diese Anordnung bei nichtlinearer Wechselwirkung der Anregungsstrahlung mit der Probe. Hier führt die quadratische (im Falle der Zwei-Photonenanregung) oder kubische Abhängigkeit (im Falle der Anregung der dritten Harmonischen oder der Drei-Photonenanregung) der Lichtemission in der Probe von der Intensität bei herkömmlicher Anordnung mehrerer Strahlablenkeinheiten in einer jeweiligen Pupille derart, dass die Ablenkeinheiten nicht aufeinander abgebildet werden, zu Problemen in der Bildfeldausleuchtung. Der physikalische Abstand der Ablenkeinheiten vor dem Scanobjektiv wird mit der axialen Vergrößerung, die quadratisch mit der lateralen Vergrößerung zunimmt, in die Objektivpupille abgebildet. Das führt zu einer nichtstationären Pupille, die in einer feldabhängigen Anregungsintensität resultiert. Diese Probleme in der nichtlinearen Optik (NLO) können durch die Anordnung der Strahlablenkeinheit in einer nichtkollimierten Pupille vermieden werden, da hierdurch eine gute Abbildung der Ablenkeinheiten aufeinander in einer lichteffizienten Anordnung möglich wird. Typischerweise erfolgt die Detektion der Fluoreszenz hier nicht über die Strahlablenkeinheit, sondern bereits vorher im sogenannten "nicht-descannten" Strahlengangabschnitt. Da die Anordnung aber genauso in Anregungsrichtung wirkt wie in Detektionsrichtung, wird auch in diesem Fall die saubere Abbildung der Pupillen erzielt.

Vorzugsweise ist das zweite Zwischenbild sphärisch gekrümmt oder zumindest im wesentlichen sphärisch gekrümmt, insbesondere mit einem Krümmungsradius zwischen der einfachen Brennweite und der doppelten Brennweite der Abtastungsoptik. Vorzugsweise ist der Krümmungsradius des Zwischenbildes identisch mit einem Abstand zwischen (einem Mittelpunkt der reflektierenden Oberfläche) der Ablenkeinheit und dem zweiten Zwischenbild.

Vorzugsweise liegt in dieser ersten Ausführungsformen das gekrümmte zweite Zwischenbild konzentrisch um die zweite Strahlablenkeinheit. Dadurch liegt bei einem sphärisch gekrümmten Zwischenbild unabhängig von der Stellung der zweiten Strahlablenkeinheit der Fokus auf der von dem Zwischenbild gebildeten Kugelfläche.

Auf diese Weise werden keine Optiken zur Korrektur einer Bildfeldwölbung, insbesondere als Teil der Abtastungsoptik, benötigt.

Vorteilhafterweise kann ein Krümmungsradius R_{H} des Hohlspiegels doppelt so groß wie ein Krümmungsradius R_{ZB} des zweiten Zwischenbilds sein, so dass nach dem Hohlspiegel (wandlerseitig) ebene Wellenfronten vorliegen. Auf diese Weise liegt die zweite konjugierte Pupille in einem kollimierten Strahlengangabschnitt und die Strahldurchmesser in den beiden konjugierten Pupillen sind gleich. Zweckmäßigerweise ist der Hohlspiegel dann so angeordnet, dass aus dem Fokus des Mikroskopobjektivs (durch das zweite Zwischenbild) kommende Strahlen nach dem Hohlspiegel parallel zueinander, vorzugsweise auch parallel zu einer Ebene, innerhalb derer die erste Ablenkeinheit einfallendes Licht ablenken kann, verlaufen und gegenüber einer Mittelachse des Hohlspiegels geneigt sind. Der Abstand A zwischen Hohlspiegel und dem gekrümmten Zwischenbild ist dann gleich dem Radius des Zwischenbildes R_{H}: R_{H}=2·R_{ZB}=2·A. In Verbindung mit dem gekrümmten zweiten Zwischenbild ist so eine besonders hohe Abbildungsqualität des optischen Systems mit geringem Aufwand möglich. Es können nach dem Hohlspiegel aber auch von Null verschiedene Wellenfrontkrümmungen vorliegen, wenn der Hohlspiegel-Krümmungsradius R_{H} vom Doppelten des Zwischenbild-Radius R_{ZB} um eine Differenz D abweicht. Für den Hohlspiegel-Radius R_{H}=2·R_{ZB}+D beträgt der Abstand A zwischen Hohlspiegel und Zwischenbild A=R_{ZB}+D. Weiterhin können die Strahldurchmesser auf der ersten Strahlablenkeinheit und auf der zweiten Strahlablenkeinheit ungleich sein, beispielsweise bei einem Abbildungsmaßstab ungleich 1:1.

Der Krümmungsradius R_{H} des Hohlspiegels kann jedoch auch vom Doppelten des Krümmungsradius R_{ZB} des Zwischenbildes abweichen. Ein Hohlspiegel des Krümmungsradius R_{H}=A wird beispielsweise im Abstand A/2 vom gekrümmten Zwischenbild angeordnet, so dass das Licht auf der optischen Achse (wenn die Strahlablenkeinheiten in ihrer Mittelstellung stehen) kollimiert wird.

In der zweiten alternativen Ausführungsform kollimiert die Abtastungsoptik Lichtstrahlen aus dem ersten Zwischenbild und leitet sie anschließend über die zweite Strahlablenkeinheit (deren reflektierende Oberfläche) auf den Hohlspiegel, welcher so angeordnet ist, dass er derart kollimierte Lichtstrahlen in ein zweites, insbesondere um die zweite Strahlablenkeinheit konzentrisches Zwischenbild fokussiert, welches optisch zwischen dem Hohlspiegel und der ersten Strahlablenkeinheit liegt. Diese Ausführungsform ermöglicht den Einsatz der erfindungsgemäßen Verzeichnungskompensation mit herkömmlichen Abtastungsoptiken.

Das Mikroskop kann zweckmäßigerweise eine Beleuchtungsoptik zum Abbilden der Lichtverteilung in ein Zwischenbild, insbesondere in das zweite Zwischenbild oder in ein drittes oder weiteres Zwischenbild, und/oder eine Detektionsoptik zum Abbilden eines Zwischenbildes, insbesondere des zweiten Zwischenbildes oder eines dritten oder weiteren Zwischenbildes, auf einen optoelektronischen Wandler umfassen.

Insbesondere kann das optische System einen Strahlteiler umfassen, der so im Beleuchtungsstrahlengang und im Detektionsstrahlengang angeordnet ist, dass aus dem Fokus kommendes Licht zum optoelektronischen Wandler hin aus dem Beleuchtungsstrahlengang ausgekoppelt wird.

Zweckmäßigerweise kann das optische System (im Beleuchtungsstrahlengang beziehungsweise im Detektionsstrahlengang) auf einer von der Abtastungsoptik abgewandten Seite der Strahlablenkeinheit eine Kollimationsoptik umfassen. Auf diese Weise sind weitere Manipulationen an den Strahlen und die finale Detektion mit geringem Aufwand möglich.

Zweckmäßigerweise ist die erste Strahlablenkeinheit so drehbar, dass die optische Achse des Beleuchtungsstrahlengangs aus einer Ebene, die durch eine Einfallsrichtung der optischen Achse auf die ersten Strahlablenkeinheit und eine optische Achse des Mikroskopobjektivs aufgespannt wird, heraus ablenkbar ist.

Die Erfindung umfasst auch Mikroskope mit einer reversibel in den Beleuchtungsstrahlengang bewegbaren dritten Strahlablenkeinheit und einer variabel einstellbaren vierten Strahlablenkeinheit, die derart angeordnet sind, dass der Beleuchtungsstrahlengang in einer im Beleuchtungsstrahlengang befindlichen Position der dritten Strahlablenkeinheit über die dritte Strahlablenkeinheit zur vierten Strahlablenkeinheit, von dort zurück zur dritten Strahlablenkeinheit und über den Hohlspiegel zur zweiten Strahlablenkeinheit verläuft. Ist die dritte Strahlablenkeinheit außerhalb des Beleuchtungsstrahlenganges positioniert, verläuft der Beleuchtungsstrahlengang wie oben beschrieben über die erste Strahlablenkeinheit, den Hohlspiegel und die zweite Strahlablenkeinheit. Auf diese Weise kann mit geringem Aufwand zwischen verschiedenen Abtastmodalitäten gewechselt werden. Die vierte Strahlablenkeinheit kann beispielsweise ein resonant schwingender Spiegel sein, während die erste Strahlablenkeinheit ein Galvanometerspiegel ist, oder umgekehrt. Das ermöglicht den flexiblen Einsatz in der Forschung an fixierten Zellen, lebenden Zellen oder Zellverbänden und Kleintieren oder in Screening-Anwendungen. Bei Manipulationsexperimenten wie FRAP wird so eine schnelle Umschaltung von Manipulation der Probe (Bleichen) auf Bildgebung mit hoher Bildwiederholrate ermöglicht, um den schnellen Anstieg des Fluoreszenzsignals nach Ende des Bleichvorganges zu messen. Die dritte Strahlablenkeinheit kann zu diesem Zweck hinsichtlich der Ablenkrichtung variabel einstellbar sein, sie kann stattdessen aber auch eine statische Orientierung aufweisen. Sie kann durch eine Translations- und/oder Rotationsbewegung in den Beleuchtungsstrahlengang bewegbar sein, wofür sie einen entsprechenden Antrieb aufweisen kann.

Vorzugsweise verfügt nur die erste Konfiguration, in welcher der Hohlspiegel und die zweite Strahlablenkeinheit in den Beleuchtungsstrahlengang eingebunden sind, über die erfindungsgemäße Verzeichnungskompensation. Die vierte Strahlablenkeinheit kann beispielsweise einen in resonanter Schwingung betreibbaren Spiegel ("Resonanz-Scanner") umfassen, es kann sich aber auch um einen Galvanometerspiegel handeln.

Der Hohlspiegel, insbesondere seine reflektierende Oberfläche, weist eine torische Form (Oberflächenform eines Torusschnittes) auf, wobei er auch andere Formen aufweisen kann. Dadurch kann der aus schrägem Einfall resultierende Astigmatismus verringert werden. Vorzugsweise weist der Hohlspiegel dabei einen ersten Krümmungsradius, der um einen Faktor Cos(Einfallswinkel) kleiner als das Doppelte des Krümmungsradius des Zwischenbilds ist, und einen zweiten Krümmungsradius, der um den Faktor Cos(Einfallswinkel) größer als das Doppelte des Krümmungsradius des Zwischenbildes ist, auf. Vorzugsweise verläuft die zum ersten Krümmungsradius gehörige erste Krümmung um eine Achse, die parallel zu einer Drehachse der ersten Strahlablenkeinheit ist, und die zum zweiten Krümmungsradius gehörige Krümmung orthogonal zur ersten Krümmung.

Es gibt Vergleichsbeispiele, in denen ein Teil der oder die gesamte Abtastungsoptik entlang einer optischen Achse des Beleuchtungsstrahlengangs verschiebbar ist. Sie können insbesondere einen elektrischen Antrieb zur Verschiebung des verschiebbaren Teils oder der gesamten Abtastungsoptik umfassen. Durch die axiale Verschiebung kann mit geringem Aufwand die Lage (der Abstand) der konjugierten Pupille relativ zur zweiten Ablenkeinheit eingestellt werden, wohingegen bisher die Lage der Abtastungsoptik nur einmalig zur Justierung der Fokuslage und damit zur Justierung der Kollimation auf der Strahlablenkeinheit eingestellt und fixiert wurde. Dadurch kann insbesondere eine Pupillenverschiebung, die beispielsweise beim Wechsel des Mikroskopobjektivs auftritt, kompensiert werden. Die axiale Lage der konjugierten Pupille variiert dabei mit dem Quadrat des Abbildungsmaßstabs zwischen erster Ablenkeinheit und Objektivpupille. Die Fokuslage in der Zwischenbildebene und damit auch in der Objektebene bleibt dabei weitgehend erhalten.

Vorzugsweise ist die Abtastungsoptik so ausgebildet, dass ihre Abbildung (vom ersten Zwischenbild in das zweite Zwischenbild) einen Vergrößerungsfaktor zwischen 0,8 und 1,2, insbesondere zwischen 0,9 und 1,1, insbesondere von genau 1, aufweist. Auf diese Weise bleibt die Lage des ersten Zwischenbildes und damit die probenseitige Fokalebene mit hoher Genauigkeit konstant. Am besten bleibt der Fokus bei einer 1:1-Abbi!dung der Abtastungsoptik vom virtuellen Objekt bis zum ersten Zwischenbild erhalten (parabelförmiger Verlauf der Fokusablage).

Es gibt Vergleichsbeispiele, in denen das Mikroskopobjektiv entlang der optischen Achse verschiebbar und/oder in einem Objektivwechsler angeordnet ist, insbesondere umfassend einen elektrischen Antrieb zur Verschiebung des Mikroskopobjektivs und/oder zum Wechseln des Mikroskopobjektivs. Dadurch wird in Verbindung mit der Anpassbarkeit an die unterschiedlichen Pupillenlagen verschiedener Objektive eine große Flexibilität bei der Messung bei gleichbleibend hoher Abbildungsqualität ermöglicht.

Vorzugsweise weisen die erste Strahlablenkeinheit und/oder die zweite Strahlablenkeinheit zur Einstellung der Strahlablenkung ein mikroelektromechanisches System auf. Dieses kann wie in US 7,295,726 B1 eine Drehbarkeit um zwei verschiedene Achsen bereitstellen, insbesondere mit Lage des (ortsfesten) Schnittpunkts dieser Achsen in einer reflektierenden (den von der Abtastungsoptik kommenden Strahl ablenkenden) Oberfläche, insbesondere mit Anordnung dieses Schnittpunkts auf der optischen Achse des Detektionsstrahlengangs. MEMS-basierte Scanner weisen eine signifikant geringere Spiegelmasse auf und haben dadurch den Vorteil, schnell in beliebiger Weise und mit hoher Genauigkeit verkippt werden zu können. Beispielsweise kann die eine Strahlablenkeinheit ein ausschließlich um genau eine Drehachse verstellbarer MEMS-basierter Spiegel und die andere Strahlablenkeinheit ein Galvanometerscanner sein. Dabei kann der Galvanometerscanner auch resonant betrieben werden.

Die Lichtquelle ist zweckmäßigerweise ein Laser. Es kann sich beispielsweise um einen durchstimmbaren Laser handeln.

Das optische System kann vorteilhafterweise eine Übertragungsoptik (engl. "relay optics") zum Erzeugen einer weiteren (dritten) konjugierten Pupillenebene umfassen. In dieser können Mittel zum Erzeugen einer vorgegebenen und vorzugsweise veränderlichen Pupillenverteilung des Lichtes angeordnet sein. Dadurch können Modifikationen in Amplitude und/oder Phase in die Pupillenebene des Mikroskopobjektivs übertragen werden. Alternativ kann das optische System Mittel zum Erzeugen einer Feldverteilung in einer fouriertransformierten Ebene umfassen, welche über die abbildende Anordnung des Hohlspiegels und der ersten und zweiten Strahlablenkeinheiten in die Probe übertragbar ist. Bezogen auf das Zwischenbild sind hierbei große Werte bis ca. 1/3 der nominellen Bildfeldgröße im nicht auskorrigierten Zwischenbild zwischen Abtastungsoptik und Tubusoptik möglich. Durch solche Mittel können nicht nur 1 bis N separate Lichtstrahlenbündel, sondern auch andere eindimensionale oder zweidimensionale Lichtverteilungen wie Bilder oder Anregungsmuster in die Probe übertragen werden.

In Vergleichsbeispielen ist in einer weiteren (dritten) konjugierten Pupillenebene ein variabel einstellbarer Wellenfrontmodulator, beispielsweise wie in WO 2008/037346 A1, angeordnet. Damit können Phasenmanipulationen des Beleuchtungsstrahls vorgenommen werden, da der Leuchtfleck in der Pupillenebene während des Rastervorganges ortsfest ist. Mittels des Wellenfrontmodulators ist innerhalb des von ihm bereitgestellten maximalen Modulationshubes beispielsweise eine Verstellung der probenseitigen Fokalebene längs der optischen Achse (in z-Richtung) und damit ein Rastern einer Probe in der Tiefe möglich. In Verbindung mit einer zweidimensional variablen ersten Strahlablenkeinheit ermöglicht das eine dreidimensionale Verschiebung des Messorts und damit ein dreidimensionales Abrastern der Probe.

Alternativ zur Verschiebung des Fokus längs der optischen Achse können mittels eines ortsaufgelöst einstellbaren Wellenfrontmodulators auch ortsabhängige Abbildungsfehler, die beispielsweise aus lokalen Variationen einer oder mehrerer Probeneigenschaften herrühren, kompensiert werden. Zu diesem Zweck kann das Mikroskop eine Steuereinheit umfassen, die mindestens ein Bild einer Probe aufnimmt und anhand mindestens einer vorgegebenen, das Bild beeinflussenden Eigenschaft der Probe, insbesondere einer tatsächlichen Verteilung einer Eigenschaft in der Probe, und anhand des Bildes Stellwerte für den Wellenfrontmodulator ermittelt (und den Wellenfrontmodulator entsprechend einstellt). Insbesondere kann die Steuereinheit anhand des Bildes eine gemessene Verteilung der Probeneigenschaft ermitteln und die Stellwerte derart ermitteln, dass eine Abweichung zwischen der gemessenen Verteilung und der tatsächlichen Verteilung minimal ist, beispielsweise mittels einer Ausgleichsrechnung.

Vorzugsweise ist eine Drehachse der ersten Strahlablenkeinheit (30A) orthogonal oder zumindest näherungsweise orthogonal zu einer Drehachse der zweiten Strahlablenkeinheit (30B) .

Das Mikroskop ist vorzugsweise ein Lichtrastermikroskop, insbesondere ein konfokales Lichtrastermikroskop, oder ein Lichtblattmikroskop, beispielsweise wie in US 7,787,179 beschrieben. Sowohl bei einem Lichtrastermikroskop als auch bei einem Lichtblattmikroskop kann der Detektionsstrahlengang durch dasselbe Mikroskopobjektiv, beispielsweise mit Separation vom Beleuchtungsstrahlengang mittels eines Strahlteilers, oder durch ein separates Detektionsobjektiv verlaufen.

Nachfolgend wird die Erfindung anhand von Ausführungsbeispielen näher erläutert.

In den Zeichnungen zeigen:
Fig. 1 ein Lichtrastermikroskop mit erfindungsgemäßer Transferoptik,
Fig. 2 und Fig. 3 Details der Transferoptik,
Fig. 4 die Winkelverhältnisse innerhalb der Transferoptik,
Fig. 5 die zu kompensierende Verzeichnung des Hohlspiegels und die Wirkung der Kompensation,
Fig. 6 weitere Details der Transferoptik,
Fig. 7 eine erweiterte Transferoptik mit dritter konjugierter Pupille und
Fig. 8 eine alternatives Lichtrastermikroskop mit herkömmlicher Abtastungsoptik.

In allen Zeichnungen tragen übereinstimmende Teile gleiche Bezugszeichen.

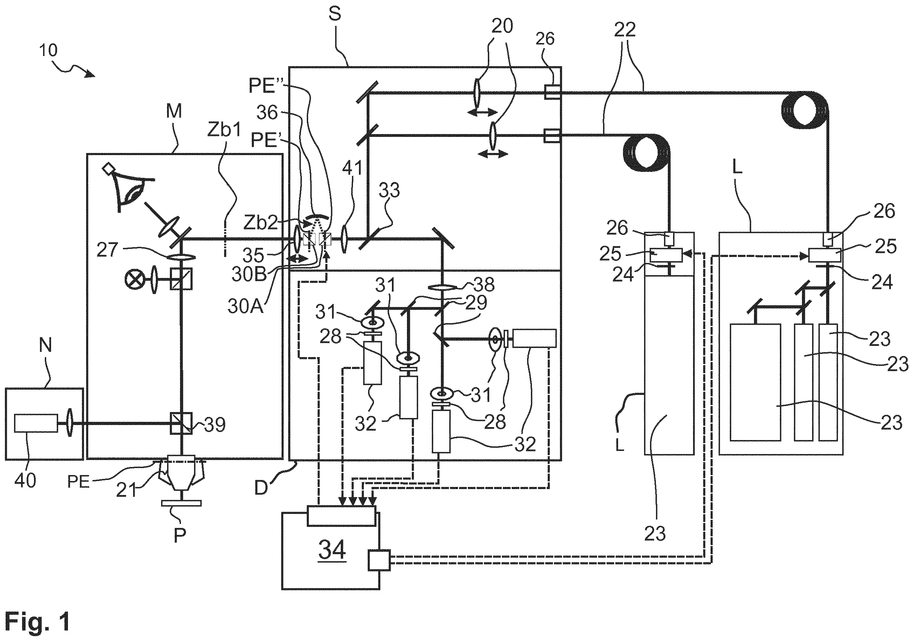

**Fig. 1** ist eine schematische Darstellung eines Lichtrastermikroskops 10 ("LSM"), das mittels einer Steuereinheit 34 gesteuert wird. Das LSM 10 ist modular aus zwei Beleuchtungsmodulen L mit Lasern 23, einem Abtastmodul S (engl. "scanning module"), einem Detektionsmodul D und der Mikroskopeinheit M mit dem Mikroskopobjektiv 21 zusammengesetzt. Die Mikroskopeinheit M verfügt beispielsweise über einen Objektivrevolver zum Einschwenken unterschiedlicher Mikroskopobjektive 21.

Das Licht der Laser 23 kann durch Lichtklappen 24 und Abschwächer 25, beispielsweise ausgeführt als AOTF, von der Steuereinheit 34 beeinflusst werden, bevor es über Lichtleitfasern 22 und Koppeloptiken 20, beispielsweise in Form von Kollimationsoptiken, in die Abtasteinheit S eingespeist und vereinigt wird. Jeder Laser 23 zusammen mit den Optiken bis hin zu der jeweiligen Lichtleitfaser 22 kann als eine jeweilige Lichtquelle angesehen werden, die am Ende der betreffenden Lichtleitfaser 22 eine konfokale, punktförmige Lichtverteilung bereitstellt, die entlang eines Beleuchtungsstrahlengangs in die Probe P abgebildet wird. Über den Hauptstrahlteiler 33, eine schwache Zylinderoptik 41, eine in X-Richtung variabel einstellbare erste Strahlablenkeinheit 30A, einen beispielsweise sphärischen Hohlspiegel 36 und die in Y-Richtung (orthogonal zur X-Richtung) variabel einstellbare zweite Strahlablenkeinheit 30B gelangt das Anregungslicht zum Mikroskopobjektiv 21, weiches das Licht in der Probe P in den Messort fokussiert.

Der Hohlspiegel 36 bildet die beiden Strahlablenkeinheiten 30A und 30B aufeinander ab. Der Hohlspiegel 36 und die Strahlablenkeinheiten 30A, 30B sind so angeordnet, dass der Beleuchtungsstrahlengang am Hohlspiegel 36 genau einmal reflektiert wird und eine dabei durch den Hohlspiegel 36 verursachte erste Verzeichnung und eine durch die erste und die zweite Strahlablenkeinheit 30A, 30B verursachte zweite Verzeichnung der Abbildung einander kompensieren. Die Zylinderoptik 41 kompensiert den Astigmatismus, der durch den achsenfernen Einfall auf den Hohlspiegel 36 entsteht.

Von der Probe P rückgestreutes Anregungslicht und emittiertes Fluoreszenzlicht gelangt durch das Mikroskopobjektiv 21, die Tubuslinse 27 und die Abtastungsoptik 35 über die Strahlablenkeinheiten 30A und 30B sowie den Hohlspiegel 36 durch die Zylinderoptik 41 und den Hauptstrahlteiler 33 in das Detektionsmodul D.

Das Mikroskopobjektiv 21 weist eine unendliche Ausgangsschnittweite auf, so dass bis zur Tubuslinse 27 ein kollimierter Strahlengang vorliegt. Innerhalb des Mikroskopobjektivs 21 liegt dessen (Austritts-) Pupillenebene PE. Die Tubusoptik 27 erzeugt ein erstes Zwischenbild Zb1, das von der Abtastungsoptik 35 in ein zweites Zwischenbild Zb2 abgebildet wird. Die zweite Strahlablenkeinheit 30B liegt dadurch in einem konvergenten Abschnitt des Detektionsstrahlengangs. Dabei liegt eine zur Pupillenebene PE konjugierte Pupillenebene PE' auf der zweiten Strahlablenkeinheit 30B. Die erste Strahlablenkeinheit 30A ist so drehbar, dass die optische Achse des Beleuchtungsstrahlengangs aus einer Ebene, die durch eine Einfallsrichtung der optischen Achse auf die ersten Strahlablenkeinheit 30A und eine optische Achse des Mikroskopobjektivs aufgespannt wird, heraus ablenkbar ist. Der Hohlspiegel 36 bildet das zweite Zwischenbild Zb2 anschließend nach unendlich ab, so dass am Hauptstrahlteiler 33 ausschließlich kollimierte Strahlenbündel vorliegen. In Vergleichsbeispielen (nicht abgebildet) können am Hauptstrahlteiler 33 konvergente oder divergente Strahlenbündel vorliegen. Die Koppeloptiken 20 im Abtastmodul S und die Detektionsoptik 29 sind dann entsprechend anzupassen.

Die Abtastungsoptik 35 ist beispielsweise mittels eines Antriebs längs der optischen Achse des vereinigten Detektions- und Beleuchtungsstrahlengangs verschiebbar. Damit kann die Lage der konjugierten Pupillenebene PE' auch bei einer Änderung der Pupillenebene PE im Falle eines Wechsels oder einer axialen Verschiebung des Mikroskopobjektivs 21 axial auf der Strahlablenkeinheit 30 gehalten werden.

Zur Fluoreszenzdetektion kann der Hauptstrahlteiler 33 beispielsweise als dichroitischer Farbteiler ("Hauptfarbteiler") ausgebildet sein, so dass das rückgestreute Anregungslicht in Richtung der Laser 23 ausgespiegelt wird.

Das Detektionsmodul D weist nach einer Detektionsoptik 38, beispielsweise einer Sammellinse, mehrere Detektionskanäle mit jeweils einer Lochblende 31, einem Filter 28 und einem Photovervielfacher 32 als optoelektronischen Wandler auf, die durch Farbteiler 29 ("Nebenfarbteiler") spektral separiert sind. Anstelle von Lochblenden 31 können, beispielsweise bei linienförmiger Beleuchtung, auch Schlitzblenden (nicht abgebildet) verwendet werden. Die Detektionsoptik 38 fokussiert die bis dahin kollimierten Strahlenbündel auf die konfokalen Lochblenden 31. Die konfokalen Loch- oder Schlitzblenden 31 dienen der Diskriminierung von Probenlicht, das nicht aus dem Fokusvolumen am Messort stammt. Die Photovervielfacher 32 detektieren daher ausschließlich Licht aus dem Fokusvolumen und definieren so den Messort in der Probe P, von dem Licht aufgenommen und am Detektionsort in der jeweiligen lichtempfindlichen Schicht der Photovervielfacher 32 nachgewiesen wird. Alternativ können auch andere lichtempfindliche, aus dem Stand der Technik bekannte Sensoren wie Lawinendioden (engl. "avalanche diodes") verwendet werden.

Das konfokal beleuchtete und aufgenommene Messvolumen der Probe P kann mittels der Strahlablenkeinheiten 30A und 30B über die Probe P bewegt werden, um pixelweise ein Bild aufzunehmen, indem die Spiegel der Ablenkeinheiten 30A/B gezielt verdreht werden. Sowohl diese Bewegungen als auch das Schalten der Beleuchtung mittels der Lichtklappen 24 oder der Abschwächer 25 werden unmittelbar von der Steuereinheit 34 gesteuert. Die Datenaufnahme von den Photovervielfachern 32 erfolgt ebenfalls durch die Steuereinheit 34.

An einen von einem Strahlteiler 39 (auch als "NLO-Strahlteiler" bezeichnet) bereitgestellten zusätzlichen Ausgang ist ein Modul N ("NLO-Detektionsmodul") zur Detektion von Fluoreszenz nach nichtlinearer Wechselwirkung bei der Anregung angeschlossen. Es ist möglich, das NLO-Detektionsmodul N alternativ oder zusätzlich zum Detektionsmodul D anzuschließen und zur Messung zu verwenden. In Vergleichsbeispielen (nicht abgebildet) kann alternativ oder zusätzlich zum NLO-Detektionsmodul N auf der entgegengesetzten Seite der Probe ein eigenständiges NLO-Detektionsmodul mit eigenem Mikroskopobjektiv angeordnet sein und zur Detektion genutzt werden.

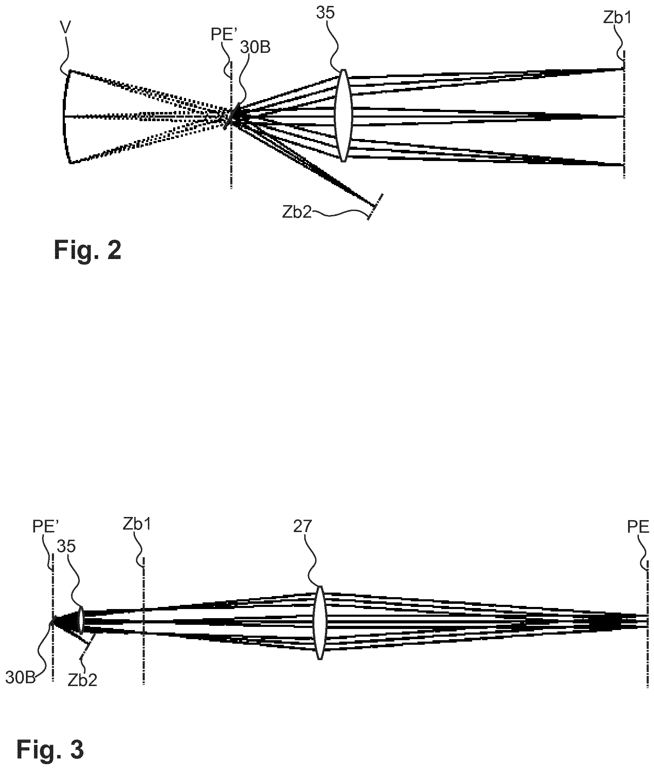

In **Fig. 2** sind die Strahlengänge um die Abtastungsoptik 35, die ein herkömmliches aufwendiges Abtastobjektiv ersetzt, indem sie das erste Zwischenbild Zb1 in ein räumlich gekrümmtes zweites Zwischenbild Zb2 abbildet, im Detail für drei verschiedene Stellungen der Strahlablenkeinheit 30 dargestellt. Die Abtastungsoptik 35 ist beispielsweise frei von einer Bildfeldwölbungskorrektur und weist einen Abbildungsmaßstab von 1:1 auf. Anhand der unterbrochen gezeichneten Linien ist erkennbar, dass die Abtastungsoptik so ausgebildet ist, dass bei Entnahme der zweiten Strahlablenkeinheit 30B ein reelles gekrümmtes Abbild der ersten Zwischenbildebene entstünde. Mit der in der konjugierten Pupille PE' angeordneten zweiten Strahlablenkeinheit 30B ist stattdessen das zweite Zwischenbild Zb2 räumlich gekrümmt.

**Fig. 3** zeigt einen erweiterten Teil der Transferoptik, die neben der Abtastungsoptik 35, dem Hohlspiegel 36 (hier nicht dargestellt) und den Strahlablenkeinheiten 30A (hier nicht dargestellt) und 30B aus Fig. 2 auch eine Tubusoptik 27 umfasst. Die Strahlengänge von der eigentlichen Pupillenebene PE des Mikroskopobjektivs (hier nicht dargestellt) bis zum zweiten Zwischenbild Zb2 sind wiederum für drei verschiedene Stellungen der zweiten Ablenkeinheit 30B dargestellt. Die Tubusoptik 27 fokussiert die aus der Pupille PE kommenden kollimierten Strahlenbündel in das erste Zwischenbild Zb1, welches die Abtastungsoptik 35 über die zweite Strahlablenkeinheit 30B, die in der konjugierten Pupille PE' angeordnet ist, in das räumlich gekrümmte zweite Zwischenbild Zb2 abbildet.

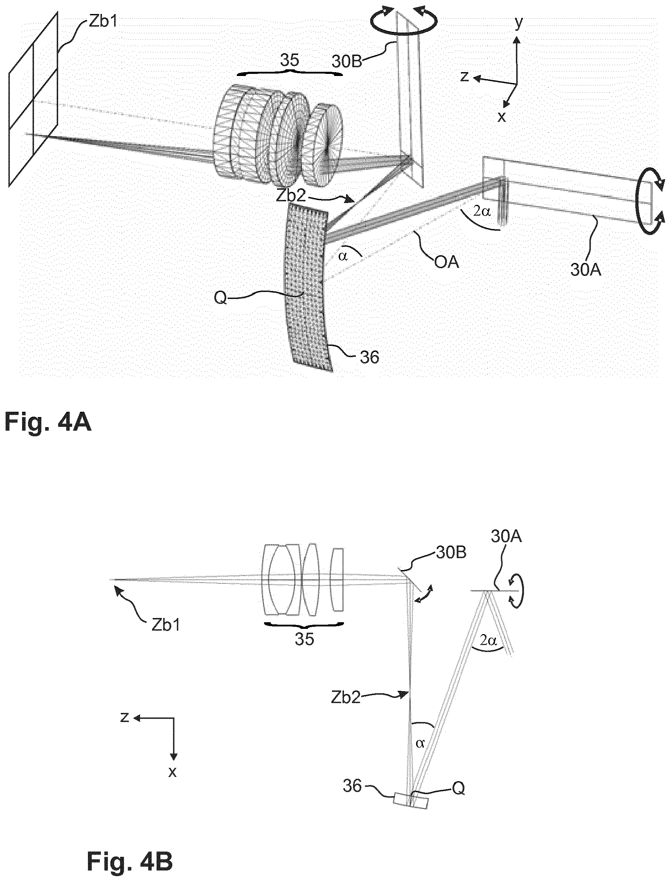

In **Fig. 4** sind in zwei verschiedenen schematischen Ansichten (pseudoperspektivisch in Fig. 4A und in Draufsicht in Fig. 4B) die Strahlablenkeinheiten 30A und 30B sowie die Abtastungsoptik 35 und der Hohlspiegel 36 dargestellt. Der Hohlspiegel weist eine sphärische Form auf. Sein Krümmungsmittelpunkt liegt auf einem Kreis um den zentralen Auftreffpunkt Q (Austrittspunkt der Hauptachse) des Hohlspiegels 36, welcher die beiden Auftreffpunkte der optischen Achse auf die Drehachsen der beiden Strahlablenkeinheiten 30A und 30 B (in deren Nullstellung) enthält. Dabei halbiert der Krümmungsmittelpunkt den Kreisbogen zwischen den Auftreffpunkten auf den beiden Drehachsen.

Der Hohlspiegel 36 und die Strahlablenkeinheiten 30A, 30B sind so angeordnet, dass der ebene Reflexionswinkel der optischen Achse OA des Beleuchtungsstrahlengangs auf der ersten Strahlablenkeinheit 30A in einer Nullstellung der ersten Strahlablenkeinheit 30A und der zweiten Strahlablenkeinheit 30B doppelt so groß ist wie der ebene Reflexionswinkel der optischen Achse OA am Hohlspiegel 36. Der Winkel zwischen der Drehachse der ersten Strahlablenkeinheit 30A und der Flächennormalen des Hohlspiegels 36 in dessen zentralem Auftreffpunkt auf der optischen Achse des Systems bei Nullstellung der Strahlablenkeinheiten 30A und 30B beträgt 90°+0.5α.

Das zweite Zwischenbild Zb2 liegt konzentrisch um die zweite Strahlablenkeinheit 30B. Zudem entspricht der Krümmungsradius des Hohlspiegels 36 einer optischen Weglänge zwischen dem Hohlspiegel 36 und der ersten Strahlablenkeinheit 30A und einer optischen Weglänge zwischen dem Hohlspiegel 36 und der zweiten Strahlablenkeinheit 30B. Dadurch kompensieren sich die Verzeichnungen des Hohlspiegels 36 und der beiden Strahlablenkeinheiten 30A, 30B maximal möglich.

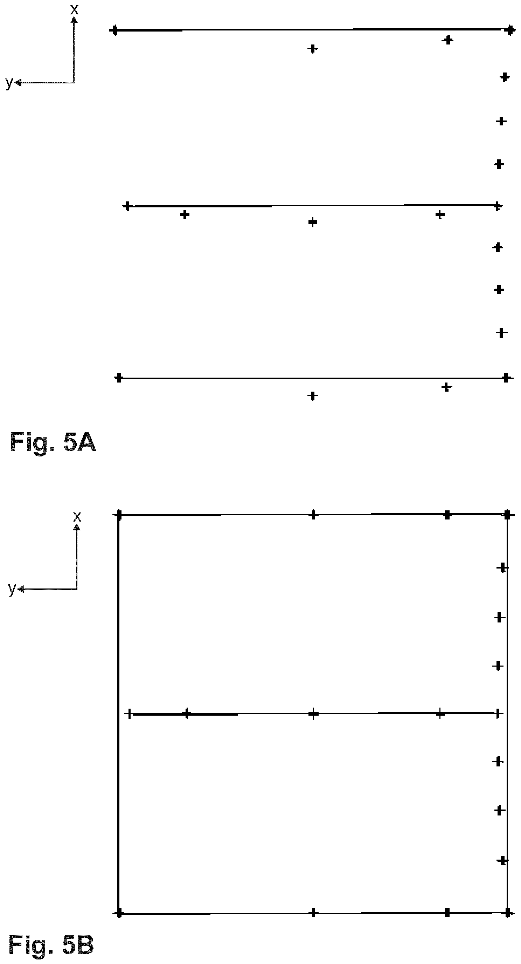

Die Verzeichnung des Hohlspiegels 36 und ihre Kompensation sind für den exemplarischen Fall eines torischen Hohlspiegel 36 aus Fig. 5 ersichtlich. In überzeichneter Darstellung zeigen Fig. 5A die Hohlspiegelverzeichnung (Abweichung der Kreuze von den Parallelen zur y-Richtung) und Fig. 5B die residuale Verzeichnung in Verbindung mit der erfindungsgemäßen Anordnung der Strahlablenkeinheiten derart, dass der Reflexionswinkel an der ersten Strahlablenkeinheit 30A doppelt so groß ist wie der Reflexionswinkel am Hohlspiegel 36.

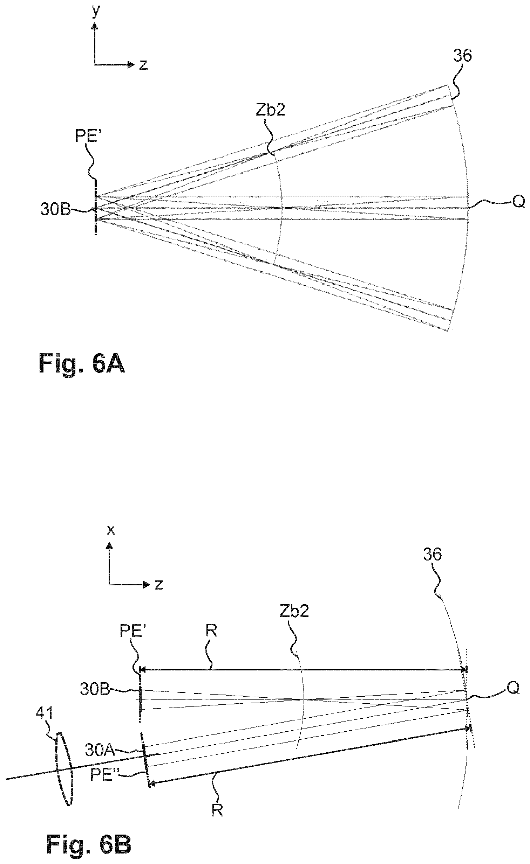

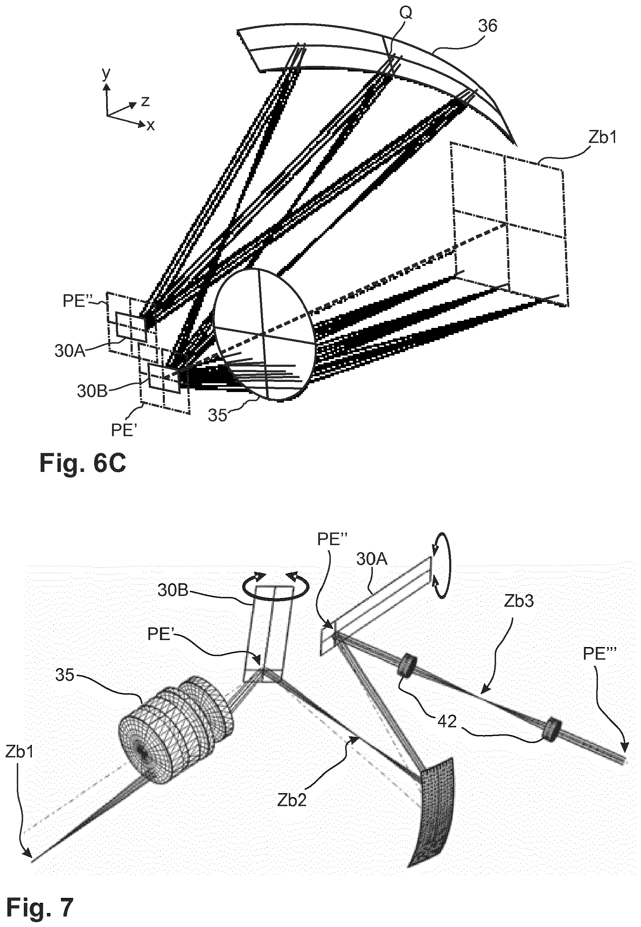

In **Fig. 6** ist in drei verschiedenen Ansichten (Fig. 6A, 6B, 6C) die vollständige Transferoptik dargestellt. Sie ersetzt beispielsweise die aus der Literatur bekannten afokalen Übertragungsoptiken (engl. "afocal relay optics") nach Kessler wie beispielsweise in US 2010/0208319 A1 oder WO 90/00755 A1 beschrieben.

Die zweite Strahlablenkeinheit 30B ist beispielsweise ein einzelner Spiegel mit MEMS-Antrieb, der um zwei zueinander orthogonale, feststehende Achsen drehbar ist. Eine dieser beiden Drehachsen ist parallel zur y-Achse. Der ortsfeste Drehpunkt des Spiegels liegt in der reflektierenden Oberfläche des Spiegels auf der optischen Achse der Transferoptik 35. Die erste Strahlablenkeinheit 30A ist beispielsweise ein einzelner Spiegel mit Galvanometerantrieb, weist also nur genau eine Drehachse auf, die in der x-z-Ebene liegt. Er kann beispielsweise in resonanter Schwingung betrieben werden. Alternativ können auch in beiden konjugierten Pupillenebenen PE' und PE" Galvanometer-Strahlablenkeinheiten eingesetzt werden, von denen eine das Licht in der Probe in x-Richtung, und der andere in y-Richtung bewegen kann.

Die zusätzliche Pupillenebene PE" wird durch den beispielsweise torischen Hohlspiegel bereitgestellt, der optisch zwischen der ersten Strahlablenkeinheit 30A und der zweiten Strahlablenkeinheit 30B angeordnet ist. Der erste Krümmungsmittelpunkt des Hohlspiegels 36 liegt im Abstand der ersten konjugierten Pupillenebene PE' auf der reflektierenden Oberfläche der ersten Strahlablenkeinheit 30A (Abstand R zwischen Hohlspiegel und konjugierter Pupille PE') und der zugehörige Krümmungsradius des Hohlspiegels ist doppelt so groß wie der Krümmungsradius des zweiten Zwischenbilds Zb2. Dadurch liegt einerseits (im identischen Abstand R) in der zweiten konjugierten Pupille PE" unabhängig vom jeweiligen Feldwinkel eine perfekte, ebene Abbildung der ersten konjugierten Pupille PE' vor und andererseits sind die Strahlen in der zweiten konjugierten Pupille PE" kollimiert, so dass dort ebene Wellenfronten vorliegen. Dadurch ist die Handhabung der Strahlen im weiteren Verlauf des Detektionsstrahlengangs einfach. In Vergleichsbeispielen (nicht abgebildet) können die Krümmungsradien von Hohlspiegel und zweitem Zwischenbild voneinander abweichen, so dass in der zweiten Pupille PE" nichtebene Wellenfronten vorliegen.

Da der Hohlspiegel 36 bei senkrechtem Lichteinfall die erste konjugierte Pupille PE' auf sich selbst abbilden würde, ist er senkrecht zu der Ebene, in der die zweite Strahlablenkeinheit 30B wirkt, um eine zu y parallele Achse durch den zentralen Auftreffpunkt des Hohlspiegels, wie oben definiert, gedreht. Durch den schrägen Lichteinfall auf den Hohlspiegel erzeugt dieser Astigmatismus, was durch die torische Form maximal kompensiert wird. Zu diesem Zweck ist der Krümmungsradius entlang der y-Achse gegenüber dem Krümmungsradius des zweiten Zwischenbilds Zb2 um den Faktor cos(Einfallswinkel) verkleinert und der Krümmungsradius entlang der x-Achse gegenüber dem Krümmungsradius des zweiten Zwischenbilds Zb2 um denselben Faktor vergrößert. Eine zusätzliche Zylinderoptik ist hier nicht erforderlich.

Alternativ zur torischen Form kann der Hohlspiegel 36 eine sphärische Form aufweisen, in der erster und zweiter Krümmungsmittelpunkt, und damit auch die entsprechenden Krümmungsradien, identisch sind. Dann kann auf der von der Abtastungsoptik 35 abgewandten Seite des Hohlspiegels 36 eine Zylinderoptik 41, beispielsweise in Form einer schwachen Zylinderlinse, zur Kompensation des aus dem schrägen Einfall auf den Hohlspiegel 36 resultierenden Astigmatismus angeordnet sein. Vorzugsweise kann die Zylinderoptik 41 auf der von der Abtastungsoptik 35 abgewandten Seite der ersten Strahlablenkeinheit 30A, also im sogenannten "descannten" Strahlengangabschnitt, angeordnet sein. Der Krümmungsmittelpunkt des Hohlspiegels 36 liegt in der Mitte eines Kreisbogens um den zentralen Auftreffpunkt des Hohlspiegels 36, der die Auftreffpunkte der optischen Achse auf die erste und zweite Strahlablenkeinheit 30A und 30B in deren Nullstellung umfasst.

**Fig. 7** zeigt in einer Fig. 4A entsprechenden, leicht gedrehten Darstellung einen Ausschnitt einer um eine Übertragungsoptik 42 erweiterten Transferoptik. Die Übertragungsoptik 42 dient dazu, eine dritte konjugierte Pupillenebene PE''' bereitzustellen. In ihr kann beispielsweise ein variabel einstellbarer Wellenfrontmodulator (nicht dargestellt) angeordnet sein.

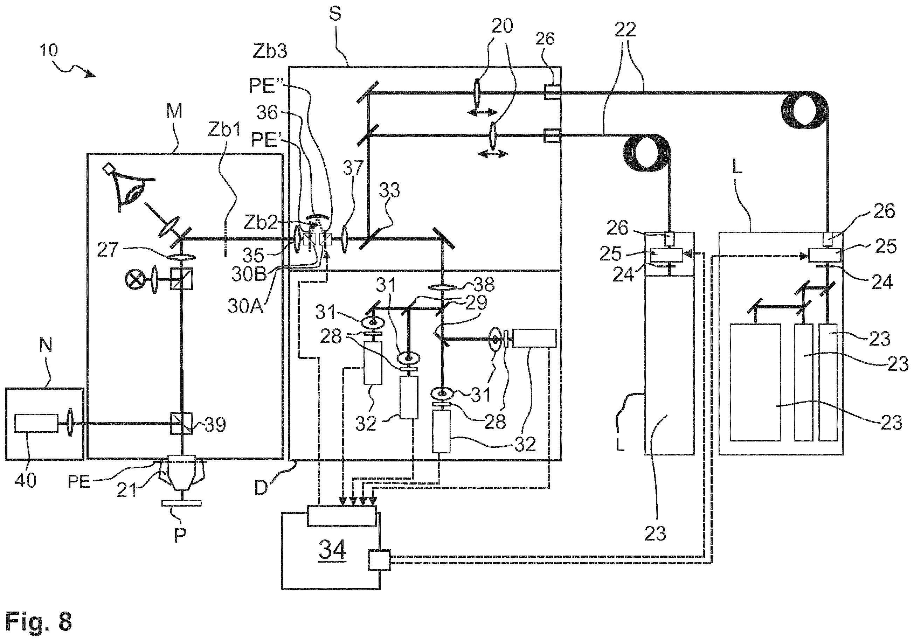

Schließlich zeigt **Fig. 8** ein Lichtrastermikroskop 10, das weitgehend dem in Fig. 1 dargestellten entspricht. Die Transferoptik liegt jedoch in einer alternativen Ausführungsform vor. Die Abtastungsoptik 35 bildet auf herkömmliche Weise unter Bildfeldwölbungskorrektur das erste Zwischenbild Zb1 nach unendlich ab. Der Beleuchtungsstrahlengang ist dadurch im Bereich der ersten konjugierten Pupille PE', in welcher die zweiten Strahlablenkeinheit 30B angeordnet ist, kollimiert. Der Hohlspiegel 36 fokussiert ihn in das zweite Zwischenbild Zb2, welches in dieser Ausführungsform zwischen dem Hohlspiegel 36 und der ersten Strahlablenkeinheit 30A liegt und eben ist. Der Hohlspiegel 36 bildet wie in Fig. 1 die beiden Strahlablenkeinheiten 30A und 30B aufeinander ab.

Eine Kollimationsoptik 37 bildet das zweite Zwischenbild Zb2 anschließend über den Hauptstrahlteiler 33 nach unendlich ab.

Der Hohlspiegel weist eine sphärische Form auf. Sein Krümmungsmittelpunkt liegt in der Mitte eines Kreisbogens um den zentralen Auftreffpunkt des Hohlspiegels 36, der die Auftreffpunkte der optischen Achse auf die erste und zweite Strahlablenkeinheit 30A und 30B in deren Nullstellung umfasst.

Der Hohlspiegel 36 und die Strahlablenkeinheiten 30A, 30B sind wiederum so angeordnet, dass der ebene Reflexionswinkel der optischen Achse OA des Beleuchtungsstrahlengangs auf der ersten Strahlablenkeinheit 30A in einer Nullstellung der ersten und der zweiten Strahlablenkeinheit 30A, 30B doppelt so groß ist wie der ebene Reflexionswinkel der optischen Achse OA am Hohlspiegel 36. Zudem entspricht der Krümmungsradius des Hohlspiegels 36 einer optischen Weglänge zwischen dem Hohlspiegel 36 und der ersten Strahlablenkeinheit 30A und einer optischen Weglänge zwischen dem Hohlspiegel 36 und der zweiten Strahlablenkeinheit 30B. Dadurch kompensieren sich die Verzeichnungen des Hohlspiegels 36 und der beiden Strahlablenkeinheiten 30A, 30B maximal möglich.

### Bezugszeichenliste

- 10: Lichtrastermikroskop
- 20: Koppeloptik
- 21: Mikroskopobjektiv
- 22: Lichtleitfaser
- 23: Laser
- 24: Lichtklappe
- 25: Abschwächer
- 26: Faserkoppler
- 27: Tubuslinse
- 28: Filter
- 29: Farbteiler
- 30: A/B/C Erste/Zweite/Dritte Strahlablenkeinheit
- 31: Blende
- 32: Photovervielfacher
- 33: Hauptstrahlteiler
- 34: Steuereinheit
- 35: Abtastungsoptik
- 36: Hohlspiegel
- 37: Kollimationsoptik
- 38: Detektionsoptik
- 39: NLO-Strahlteiler
- 40: NLO-Detektor
- 41: Zylinderoptik
- 42: Übertragungsoptik
- D: Detektionsmodul
- L: Beleuchtungsmodul
- M: Mikroskopeinheit
- N: NLO-Detektionsmodul
- P: Probe
- PE('/"/'''): (konjugierte) Pupillenebene
- R: Abstand
- S: Scanmodul
- V: Virtuelles Objekt
- Zb1/2: Zwischenbildebene

## Patentansprüche

1. Mikroskop (10) mit einem optischen System, welches einen Beleuchtungsstrahlengang definiert und folgende Bauteile umfasst:
- eine Lichtquelle (22, 23, 24,25, 26), die eine Lichtverteilung bereitstellt,
- ein Mikroskopobjektiv (21) mit einer Pupillenebene (PE) und einem Fokus,
- eine Abtastungsoptik (35) zum Erzeugen einer zu der Pupillenebene (PE) des Mikroskopobjektivs (21) konjugierten Pupillenebene (PE'),
- mindestens zwei variabel einstellbare Strahlablenkeinheiten (30A, 30B) und
- einen Hohlspiegel (36) zum Abbilden eines jeweiligen Punktes der ersten und der zweiten Strahlablenkeinheit (30A, 30B) aufeinander,
wobei das optische System mindestens einen Punkt der Lichtverteilung und einen jeweiligen Punkt des Fokus aufeinander abbildet, wobei optisch zwischen dem Mikroskopobjektiv und der Abtastungsoptik ein erstes Zwischenbild liegt, wobei die zweite Strahlablenkeinheit (30B) in der konjugierten Pupillenebene (PE') angeordnet ist, wobei der Hohlspiegel (36) und die erste Strahlablenkeinheit (30A) und die zweite Strahlablenkeinheit (30B) so angeordnet sind, dass der Beleuchtungsstrahlengang am Hohlspiegel (36) genau einmal reflektiert wird und eine dabei durch den Hohlspiegel (36) verursachte erste Verzeichnung und eine durch die erste und die zweite Strahlablenkeinheit (30A, 30B) verursachte zweite Verzeichnung der Abbildung einander zumindest teilweise kompensieren, wobei der Hohlspiegel (36) und die erste Strahlablenkeinheit (30A) und die zweite Strahlablenkeinheit (30B) zum Kompensieren der ersten und zweiten Verzeichnungen so angeordnet sind, dass ein ebener Reflexionswinkel einer optischen Achse (OA) des Beleuchtungsstrahlengangs auf der ersten Strahlablenkeinheit (30A) in einer Nullstellung der ersten und der zweiten Strahlablenkeinheit (30A, 30B), in welcher diese die optische Achse des von der Lichtquelle kommenden, ruhenden Beleuchtungsstrahlengangs koaxial zur optischen Achse des Mikroskopobjektivs in das Mikroskopobjektiv lenken, doppelt so groß ist wie ein ebener Reflexionswinkel der optischen Achse (OA) am Hohlspiegel (36).

2. Mikroskop nach dem vorhergehenden Anspruch, wobei im Beleuchtungsstrahlengang optisch zwischen der ersten Strahlablenkeinheit (30A) und der zweiten Strahlablenkeinheit (30B) genau ein Hohlspiegel (36), insbesondere ausschließlich der Hohlspiegel (36), angeordnet ist.

3. Mikroskop nach einem der vorhergehenden Ansprüche, wobei ein Krümmungsradius des Hohlspiegels (36) einer optischen Weglänge zwischen dem Hohlspiegel (36) und der ersten Strahlablenkeinheit (30A) und einer optischen Weglänge zwischen dem Hohlspiegel (36) und der zweiten Strahlablenkeinheit (30B) entspricht.

4. Mikroskop nach dem vorhergehenden Anspruch, wobei der Hohlspiegel eine sphärische Form aufweist und insbesondere ein Krümmungsmittelpunkt des Hohlspiegels (36) zwischen der ersten Strahlablenkeinheit (30A) und der zweiten Strahlablenkeinheit (30A) liegt, weiter insbesondere auf einem Kreisbogen um einen zentralen Auftreffpunkt (Q) des Hohlspiegels (36), der durch die Auftreffpunkte der optischen Achse (OA) des optischen Systems auf die erste und die zweite Strahlablenkeinheit (30A, 30B) verläuft, weiter insbesondere in der Mitte dieses Kreisbogens.

5. Mikroskop nach einem der vorhergehenden Ansprüche, wobei das optische System zwischen der Lichtquelle (22, 23, 24,25, 26) und der ersten Strahlablenkeinheit (30A) eine Optik (41) zur Kompensation von Astigmatismus, beispielsweise eine Zylinderlinse, aufweist.

6. Mikroskop nach einem der Ansprüche 1 bis 4, wobei die Abtastungsoptik (35) das erste Zwischenbild (Zb1) über die zweite Strahlablenkeinheit (30B) in ein zweites Zwischenbild (Zb2) abbildet, welches räumlich gekrümmt ist, wobei das zweite Zwischenbild (Zb2) optisch zwischen dem Hohlspiegel (36) und der zweiten Strahlablenkeinheit (30B) liegt und der Hohlspiegel (36) so angeordnet ist, dass er kollimierte Lichtstrahlen, die ihn von der ersten Strahlablenkeinheit (30A) aus erreichen, in das zweite Zwischenbild (Zb2) fokussiert.

7. Mikroskop nach dem vorhergehenden Anspruch, wobei das zweite Zwischenbild (Zb2) konzentrisch um die zweite Strahlablenkeinheit (30B) liegt.

8. Mikroskop nach einem der Ansprüche 1 bis 4, wobei die Abtastungsoptik (35) Lichtstrahlen aus dem ersten Zwischenbild (Zb1) kollimiert und sie anschließend über die zweite Strahlablenkeinheit (30B) auf den Hohlspiegel (36) leitet, welcher so angeordnet ist, dass er derart kollimierte Lichtstrahlen in ein zweites, insbesondere um die zweite Strahlablenkeinheit (30B) konzentrisches Zwischenbild (Zb2) fokussiert, welches optisch zwischen dem Hohlspiegel (36) und der ersten Strahlablenkeinheit (30B) liegt.

9. Mikroskop nach einem der vorhergehenden Ansprüche, wobei die erste Strahlablenkeinheit (30A) so drehbar ist, dass die optische Achse (OA) des Beleuchtungsstrahlengangs aus einer Ebene, die durch eine Einfallsrichtung der optischen Achse (OA) auf die ersten Strahlablenkeinheit (30A) und eine optische Achse (OA') des Mikroskopobjektivs (21) aufgespannt wird, heraus ablenkbar ist.

10. Mikroskop nach einem der vorhergehenden Ansprüche, mit einer reversibel in den Beleuchtungsstrahlengang bewegbaren dritten Strahlablenkeinheit und einer variabel einstellbaren vierten Strahlablenkeinheit, die derart angeordnet sind, dass der Beleuchtungsstrahlengang in einer im Beleuchtungsstrahlengang befindlichen Position der dritten Strahlablenkeinheit über die dritte Strahlablenkeinheit zur vierten Strahlablenkeinheit, von dort zurück zur dritten Strahlablenkeinheit und über den Hohlspiegel (36) zur zweiten Strahlablenkeinheit (30B) verläuft.

11. Mikroskop nach einem der vorhergehenden Ansprüche, wobei das optische System eine Übertragungsoptik zum Erzeugen einer weiteren konjugierten Pupillenebene umfasst, insbesondere mit Mitteln zum Erzeugen einer vorgegebenen und/oder veränderlichen Pupillenverteilung des Lichtes oder mit Mitteln zum Erzeugen einer vorgegebenen und/oder veränderlichen Feldverteilung in einer fouriertransformierten Ebene.

12. Mikroskop nach einem der vorhergehenden Ansprüche, wobei eine Drehachse der ersten Strahlablenkeinheit (30A) orthogonal oder zumindest näherungsweise orthogonal zu einer Drehachse der zweiten Strahlablenkeinheit (30B) ist.

## Claims

1. Microscope (10) having an optical system that defines an illumination beam path and comprises the following components:
- a light source (22, 23, 24, 25, 26) providing a light distribution,
- a microscope objective (21) with a pupil plane (PE) and a focus,
- a scan optical unit (35) for generating a pupil plane (PE') conjugate to the pupil plane (PE) of the microscope objective (21),
- at least two variably adjustable beam deflection units (30A, 30B) and
- a concave mirror (36) for imaging a respective point of the first and the second beam deflection unit (30A, 30B) onto one another,
wherein the optical system images at least one point of the light distribution and a respective point of the focus onto one another, wherein a first intermediate image lies optically between the microscope objective and the scan optical unit, wherein the second beam deflection unit (30B) is arranged in the conjugate pupil plane (PE'),
wherein the concave mirror (36) and the first beam deflection unit (30A) and the second beam deflection unit (30B) are arranged such that the illumination beam path is reflected exactly once at the concave mirror (36) and a first distortion, caused by the concave mirror (36), and a second distortion, caused by the first and the second beam deflection unit (30A, 30B), of the imaged representation at least partially compensate for one another, wherein the concave mirror (36) and the first beam deflection unit (30A) and the second beam deflection unit (30B) are arranged for compensation of the first and second distortions such that a plane angle of reflection of an optical axis (OA) of the illumination beam path on the first beam deflection unit (30A) in a zero position of the first and the second beam deflection unit (30A, 30B), in which the latter steer the optical axis of the stationary illumination beam path coming from the light source coaxially to the optical axis of the microscope objective into the microscope objective, is twice as large as a plane angle of reflection of the optical axis (OA) at the concave mirror (36).

2. Microscope according to the preceding claim, wherein exactly one concave mirror (36), in particular exclusively the concave mirror (36), is arranged in the illumination beam path optically between the first beam deflection unit (30A) and the second beam deflection unit (30B)

3. Microscope according to either of the preceding claims, wherein a radius of curvature of the concave mirror (36) corresponds to an optical path length between the concave mirror (36) and the first beam deflection unit (30A) and to an optical path length between the concave mirror (36) and the second beam deflection unit (30B) .

4. Microscope according to the preceding claim, wherein the concave mirror has a spherical shape and in particular a centre of curvature of the concave mirror (36) lies between the first beam deflection unit (30A) and the second beam deflection unit (30A), more particularly on a circle arc around a central point of incidence (Q) of the concave mirror (36) extending through the points of incidence of the optical axis (OA) of the optical system on the first and the second beam deflection unit (30A, 30B), more particularly in the centre of said circle arc.

5. Microscope according to one of the preceding claims, wherein the optical system has an optical unit (41) for compensating for astigmatism, for example a cylindrical lens, between the light source (22, 23, 24, 25, 26) and the first beam deflection unit (30A).

6. Microscope according to one of Claims 1 to 4, wherein the scan optical unit (35) images the first intermediate image (Zb1) via the second beam deflection unit (30B) into a second intermediate image (Zb2), which is spatially curved, wherein the second intermediate image (Zb2) lies optically between the concave mirror (36) and the second beam deflection unit (30B), and the concave mirror (36) is arranged such that it focuses collimated light beams that reach it from the first beam deflection unit (30A) into the second intermediate image (Zb2) .

7. Microscope according to the preceding claim, wherein the second intermediate image (Zb2) lies concentrically around the second beam deflection unit (30B).

8. Microscope according to one of Claims 1 to 4, wherein the scan optical unit (35) collimates light beams from the first intermediate image (Zb1) and subsequently guides them via the second beam deflection unit (30B) onto the concave mirror (36), which is arranged such that it focuses light beams collimated in this way into a second intermediate image (Zb2), which is concentric in particular around the second beam deflection unit (30B) and which lies optically between the concave mirror (36) and the first beam deflection unit (30B).

9. Microscope according to one of the preceding claims, wherein the first beam deflection unit (30A) is rotatable such that the optical axis (OA) of the illumination beam path is deflectable out of a plane spanned by a direction of incidence of the optical axis (OA) on the first beam deflection unit (30A) and an optical axis (OA') of the microscope objective (21).

10. Microscope according to one of the preceding claims, having a third beam deflection unit, which is movable reversibly into the illumination beam path, and a variably adjustable fourth beam deflection unit, which are arranged in such a way that the illumination beam path, in a position of the third beam deflection unit situated in the illumination beam path, extends via the third beam deflection unit to the fourth beam deflection unit, from there back to the third beam deflection unit and via the concave mirror (36) to the second beam deflection unit (30B).

11. Microscope according to one of the preceding claims, wherein the optical system comprises a transmission optical unit for generating a further conjugate pupil plane, in particular having means for generating a specified and/or variable pupil distribution of the light or having means for generating a specified and/or variable field distribution in a Fourier-transformed plane.

12. Microscope according to one of the preceding claims, wherein an axis of rotation of the first beam deflection unit (30A) is orthogonal or at least approximately orthogonal to an axis of rotation of the second beam deflection unit (30B).

## Revendications

1. Microscope (10) comprenant un système optique, lequel définit un trajet de rayon d'éclairage et comporte les composants suivants :
- une source de lumière (22, 23, 24, 25, 26), qui fournit une distribution de lumière,
- un objectif de microscope (21) doté d'un plan pupillaire (PE) et d'un foyer,
- une optique de balayage (35) destinée à générer un plan pupillaire conjugué (PE') par rapport au plan pupillaire (PE) de l'objectif de microscope (21),
- au moins deux unités de déviation de rayon (30A, 30B) à réglage variable et
- un réflecteur de concentration (36) destiné à représenter un point respectif de la première et de la deuxième unité de déviation de rayon (30A, 30B) l'un au-dessus de l'autre,
le système optique représentant au moins un point de la distribution de lumière et un point respectif du foyer l'un au-dessus de l'autre, une première image intermédiaire se trouvant optiquement entre l'objectif de microscope et l'optique de balayage, la deuxième unité de déviation de rayon (30B) étant disposée dans le plan pupillaire conjugué (PE'),
le réflecteur de concentration (36) et la première unité de déviation de rayon (30A) et la deuxième unité de déviation de rayon (30B) étant disposés de telle sorte que le trajet de rayon d'éclairage au niveau du réflecteur de concentration (36) est réfléchi exactement une fois et compensent les uns les autres au moins partiellement une première distorsion d'image causée par le réflecteur de concentration (36) et une deuxième distorsion d'image causée par la première et la deuxième unité de déviation de rayon (30A, 30B) de la représentation, le réflecteur de concentration (36) et la première unité de déviation de rayon (30A) et la deuxième unité de déviation de rayon (30B), en vue de compenser les première et deuxième distorsions d'image, étant disposés de telle sorte qu'un angle de réflexion plan d'un axe optique (OA) du trajet de rayon d'éclairage sur la première unité de déviation de rayon (30A), dans un position nulle de la première et de la deuxième unité de déviation de rayon (30A, 30B), dans laquelle celles-ci dévient dans l'objectif de microscope l'axe optique du trajet de rayon d'éclairage au repos en provenance de la source de lumière de manière coaxiale par rapport à l'axe optique de l'objectif de microscope, soit égal au double d'un angle de réflexion plan de l'axe optique (OA) au niveau du réflecteur de concentration (36).

2. Microscope selon la revendication précédente, exactement un réflecteur de concentration (36), notamment exclusivement le réflecteur de concentration (36), étant disposé optiquement dans le trajet de rayon d'éclairage entre la première unité de déviation de rayon (30A) et la deuxième unité de déviation de rayon (30B).

3. Microscope selon l'une des revendications précédentes, un angle de courbure du réflecteur de concentration (36) correspondant à une longueur de chemin optique entre le réflecteur de concentration (36) et la première unité de déviation de rayon (30A) et une longueur de chemin optique entre le réflecteur de concentration (36) et la deuxième unité de déviation de rayon (30B).

4. Microscope selon la revendication précédente, le réflecteur de concentration possédant une forme sphérique et un centre de courbure du réflecteur de concentration (36) se trouvant notamment entre la première unité de déviation de rayon (30A) et la deuxième unité de déviation de rayon (30A), en outre notamment sur un arc de cercle autour d'un point d'incidence (Q) central du réflecteur de concentration (36), lequel passe par les points d'incidence de l'axe optique (OA) du système optique sur la première et la deuxième unité de déviation de rayon (30A, 30B), en outre notamment au centre de cet arc de cercle.

5. Microscope selon l'une des revendications précédentes, le système optique possédant une optique (41) destinée à la compensation de l'astigmatisme, par exemple une lentille cylindrique, entre la source de lumière (22, 23, 24, 25, 26) et la première unité de déviation de rayon (30A).

6. Microscope selon l'une des revendications 1 à 4, l'optique de balayage (35) représentant la première image intermédiaire (Zb1) par le biais de la deuxième unité de déviation de rayon (30B) dans une deuxième image intermédiaire (Zb2), laquelle est courbée dans l'espace, la deuxième image intermédiaire (Zb2) se trouvant optiquement entre le réflecteur de concentration (36) et la deuxième unité de déviation de rayon (30B) et le réflecteur de concentration (36) étant disposé de telle sorte qu'il concentre dans la deuxième image intermédiaire (Zb2) les rayons lumineux collimatés qui lui parviennent depuis la première unité de déviation de rayon (30A).

7. Microscope selon la revendication précédente, la deuxième image intermédiaire (Zb2) se trouvant concentriquement autour de la deuxième unité de déviation de rayon (30B).

8. Microscope selon l'une des revendications 1 à 4, l'optique de balayage (35) collimatant les rayons lumineux provenant de la première image intermédiaire (Zb1) et les conduisant ensuite par le biais de la deuxième unité de déviation de rayon (30B) sur le réflecteur de concentration (36), lequel est disposé de telle sorte qu'il concentre les rayons lumineux ainsi collimatés dans une deuxième image intermédiaire (Zb2), notamment concentrique autour de la deuxième unité de déviation de rayon (30B), laquelle se trouve optiquement entre le réflecteur de concentration (36) et la première unité de déviation de rayon (30B).

9. Microscope selon l'une des revendications précédentes, la première unité de déviation de rayon (30A) étant rotative de telle sorte que l'axe optique (OA) du trajet de rayon d'éclairage peut être dévié hors d'un plan qui est formé par une direction d'incidence de l'axe optique (OA) sur la première unité de déviation de rayon (30A) et un axe optique (OA') de l'objectif de microscope (21) .

10. Microscope selon l'une des revendications précédentes, comprenant une troisième unité de déviation de rayon pouvant être déplacée de manière réversible dans le trajet de rayon d'éclairage et une quatrième unité de déviation de rayon à réglage variable, lesquelles sont disposées de telle sorte que le trajet de rayon d'éclairage, dans une position de la troisième unité de déviation de rayon se trouvant dans le trajet de rayon d'éclairage, suit un tracé par le biais de la troisième unité de déviation de rayon vers la quatrième unité de déviation de rayon, de là retourne vers la troisième unité de déviation de rayon puis par le biais du réflecteur de concentration (36) vers la deuxième unité de déviation de rayon (30B).

11. Microscope selon l'une des revendications précédentes, le système optique comportant une optique de transmission destinée à générer un plan pupillaire conjugué supplémentaire, notamment comprenant des moyens destinés à générer une distribution pupillaire prédéfinie et/ou variable de la lumière ou comprenant des moyens destinés à générer une distribution de champ prédéfinie et/ou variable dans un plan obtenu par transformée de Fourier.

12. Microscope selon l'une des revendications précédentes, un axe de rotation de la première unité de déviation de rayon (30A) étant orthogonal ou au moins approximativement orthogonal à un axe de rotation de la deuxième unité de déviation de rayon (30B).
